# EUROPEAN PATENT SPECIFICATION

(11) **EP 3 312 392 B1**
(45) Date of publication and mention of the grant of the patent: **27.03.2019**
(21) Application number: 17167778.4
(22) Date of filing: 24.04.2017
(51) Int. Cl.: F01D 25/12, F01D 25/24, F01D 11/08, F01D 9/04

(54) **TURBINE SHROUD AND SEAL SYSTEM**
TURBINENDECKBAND UND DICHTUNGSANORDNUNG
ANNEAU DE TURBINE ET SYSTÈME D'ÉTANCHÉITÉ

(30) Priority: 24.05.2016 US 201615163079; 22.07.2016 US 201615217305
(43) Date of publication of application: 25.04.2018
(73) Proprietor: Rolls-Royce North American Technologies, Inc., Indianapolis, IN 46241 (US)
(72) Inventor: Rice, Edward, Indianapolis, IN 46234 (US); Vetters, Daniel, Indianapolis, IN 46234 (US)
(74) Representative: Rolls-Royce plc

(56) References cited:
- US-A1- 2005 123 389
- US-A1- 2014 341 707
- US-A1- 2014 341 711

## Description

The present disclosure relates generally to gas turbine engines, and more specifically to seal systems for turbine sections used in gas turbine engines.

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Compressors and turbines typically include alternating stages of static vane assemblies and rotating wheel assemblies. The rotating wheel assemblies include disks carrying blades around their outer edges. When the rotating wheel assemblies turn, tips of the blades move along blade tracks included in static shrouds that are arranged around the rotating wheel assemblies. Such static shrouds may be coupled to an engine case that surrounds the compressor, the combustor, and the turbine.

The static shrouds may be exposed to high temperatures from the products of the combustion reaction in the combustor. Typical turbines are formed to include cavities arranged to receive pressurized air from the compressor which is used to cool hot turbine components such as the static shrouds. The turbines may include seals located between the turbine components to block the hot products of the combustion reaction from flowing between the turbine components into the cavities. The seals may experience large pressure forces and can degrade when a large pressure difference is formed between the hot products of the combustion reaction and the air delivered to the cavities.

US 2014/0341707 A1 discloses a shroud arrangement comprising a seal segment, a carrier and an engine casing which sit in radial series outside of a main gas path of a turbine rotor. An array of seal segments are linked to provide an annular shroud. US 2014/0341711 A1 discloses a shroud arrangement including a seal segment in the form of one or more plates defining fore and aft cooling circuits, The fore and aft cooling circuits are fluidically separated from one another within the plate, each circuit including a tortuous path between an inlet on an outboard side of the plate and an exhaust.US2005/0123389 A1 discloses a shroud assembly for a gas turbine engine, the assembly defining a recirculation cavity radial outward of a main gas path of a turbine rotor. A dilution jet opening is in flow communication with the cavity and an angled slot is positioned radially inward and in flow communication with the cavity and the main gas path.

The present invention provides a gas turbine engine as set forth in Claim 1 appended hereto. Embodiments of the invention may comprise one or more of the following features and combinations thereof.

A gas turbine engine may include a blade track, a support assembly, and a seal system. The blade track may be arranged around a central axis of the gas turbine engine. The blade track may include a leading edge, a trailing edge axially spaced apart from the leading edge, a radial outer surface that extends between the leading and trailing edges, and a radial inner surface spaced apart from the radial outer surface. The support assembly may be arranged around the blade track to support the blade track relative to the central axis.

The support assembly may be formed to define a retention cavity, a vent cavity, and a bleed cavity. The retention cavity may be configured to receive relatively high-pressure compressor air that is directed to the leading edge of the blade track to resist gasses from flowing past the leading edge over the radial outer surface of the blade track. The vent cavity may be configured to receive relatively low-pressure compressor air that is directed to the trailing edge of the blade track to resist the gasses from flowing past the trailing edge over the radial outer surface of the blade track. The bleed cavity may fluidly interconnect the retention cavity with the vent cavity and may be configured to receive intermediate-pressure compressor air.

The seal system may include a first seal and a second seal. The first seal may be configured to block fluid communication between the retention cavity and the bleed cavity. The second seal may be configured to block fluid communication between the bleed cavity and the vent cavity so that a pressure difference across either of the first and second seals is less than a pressure difference between the retention cavity and the vent cavity.

In some embodiments, the gas turbine engine may include a compressor having a plurality of compressor stages. The bleed cavity may be fluidly connected to a first of the plurality of compressor stages.

In some embodiments, the retention cavity may be fluidly connected to a second of the plurality of compressor stages. The second of the plurality of compressor stages may be located downstream of the first of the plurality of compressor stages.

In some embodiments, the support assembly may include a carrier arranged radially outward of and around the blade track and a track-retaining vane assembly that cooperate with the blade track to define the vent cavity. The track-retaining vane assembly may include an outer band that engages the trailing edge of the blade track and a static airfoil that extends radially inward of the outer band.

In some embodiments, the support assembly may further include a turbine case arranged around the carrier. The turbine case may cooperate with the carrier to define the retention cavity.

In some embodiments, the support assembly may further include a turbine case arranged around the track-retaining vane assembly. The carrier and the track-retaining vane assembly may cooperate to define the bleed cavity.

In some embodiments, the support assembly may include a carrier that cooperates with the blade track to define a thermal management chamber therebetween. In some embodiments, the support assembly may further include a distribution plate coupled to the carrier. The distribution plate may extend axially through the thermal management chamber to partition the thermal management chamber into a radial outer distribution cavity configured to receive and distribute cooling air circumferentially around the central axis and a radially inner cooling cavity. The distribution plate may be formed to include a plurality of holes arranged to direct the cooling air out of the distribution cavity into the cooling cavity toward the radial outer surface of the blade track. In some embodiments, the cooling cavity may be in fluid communication with the vent cavity.

In some embodiments, the gas turbine engine may further include a compressor having a plurality of compressor stages. The thermal management chamber may be fluidly connected to a first of the plurality of compressor stages. The bleed cavity may be fluidly connected to a second of the plurality of compressor stages. The retention cavity may be fluidly connected to a third of the plurality of compressor stages. The third of the plurality of compressor stages may be located downstream of the first and second of the plurality of compressor stages. The second of the plurality of compressor stages may be located downstream of the first of the plurality of compressor stages.

According to another aspect of the present disclosure, a gas turbine engine may include a turbine case, an annular turbine shroud, a blade-track retainer, a first seal, and a second seal. The turbine case may be arranged around a central axis of the gas turbine engine. The annular turbine shroud may be arranged to define an inner flow path configured to conduct hot, low-pressure gasses axially through the annular turbine shroud. The annular turbine shroud may be located radially between the turbine case and the central axis to define a retention cavity located between the annular turbine shroud and the turbine case.

The blade-track retainer may be located radially between the turbine case and the central axis to define a bleed cavity located between the blade-track retainer and the turbine case. The blade-track retainer and the annular turbine shroud may cooperate to define a vent cavity in fluid communication with the low-pressure gasses in the inner flow path. The first seal may be engaged with the turbine case and the turbine shroud to block air from escaping the retention cavity and flowing into one of the bleed cavity and the vent cavity. The second seal may be engaged with the turbine shroud and the blade-track retainer to block air from escaping the bleed cavity and flowing into the vent cavity so that a pressure difference across either of the first and second seals is less than a pressure difference between a pressure of the air in the retention cavity and a pressure of the low-pressure gasses.

In some embodiments, the annular turbine shroud may include a full hoop blade track comprising ceramic materials and a carrier comprising metallic materials and arranged around the blade track. In some embodiments, the carrier may include a support band that extends axially relative to the central axis to form a portion of the retention cavity and an aft flange that extends radially outward toward the turbine case to close an aft end of the retention cavity. The first seal may engage the aft flange of the carrier.

In some embodiments, the turbine case may include an outer band spaced apart from the support band of the carrier and a partition flange that extends radially inward toward the central axis. The partition flange may be located adjacent the aft flange of the carrier. The first seal may engage the partition flange.

In some embodiments, the blade-track retainer may include a forward flange that extends radially outward toward the turbine case to close a forward end of the bleed cavity. The second seal may engage the aft flange of the carrier and the forward flange of the blade-track retainer.

In some embodiments, the gas turbine engine may further include a compressor having a plurality of compressor stages. The bleed cavity may be fluidly connected to a first of the plurality of compressor stages.

In some embodiments, the retention cavity may be fluidly connected to a second of the plurality of compressor stages. The second of the plurality of compressor stages may be located downstream of the first of the plurality of compressor stages.

In some embodiments, the annular turbine shroud may include a blade track, a carrier, and a distribution plate. The carrier may be arranged circumferentially around the blade track to define a thermal management chamber therebetween. The distribution plate may be coupled to the carrier to partition the thermal management chamber into a radial outer distribution cavity configured to receive and distribute cooling air circumferentially around the central axis and a radially inner cooling cavity that is in fluid communication with the vent cavity.

According to another aspect of the present disclosure, a method of operating a turbine of a gas turbine engine may include a number of steps. The method may include feeding a retention cavity with a first flow of air having a first pressure, feeding a bleed cavity with a second flow of air having a second pressure, feeding a vent cavity with a third flow of air having a third pressure, providing a first seal between the retention cavity and the bleed cavity to block the first flow of air from escaping the retention cavity and entering the bleed cavity, and providing a second seal between the bleed cavity and the vent cavity to block the second flow of air from escaping the bleed cavity and entering the vent cavity.

In some embodiments, the first pressure may be greater than the second and third pressures. The second pressure may be greater than the third pressure.

These and other features of the present disclosure will become more apparent from the following description of the illustrative embodiments.

### BRIEF DESCRIPTION OF THE DRAWINGS

Fig. 1 is a cut-away perspective view of a gas turbine engine having a turbine section in accordance with the present disclosure;
Fig. 2 is a detail view of Fig. 1 showing that the turbine section includes a rotating turbine wheel assembly and a turbine shroud arranged around the rotating turbine wheel assembly to provide a path for gasses to flow through the turbine;
Fig. 3 is a partial cross-sectional view of the gas turbine engine of Fig. 1 showing that the turbine section is formed to define a plurality of cavities arranged to receive gasses having varying pressures to seal and cool turbine components; and
Fig. 4 is a detail view of Fig. 3 showing a seal system included in the turbine section to block the gasses from flowing between the plurality of cavities, the seal system including a plurality of seals arranged to distribute a pressure difference between the cavities across the plurality of seals.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

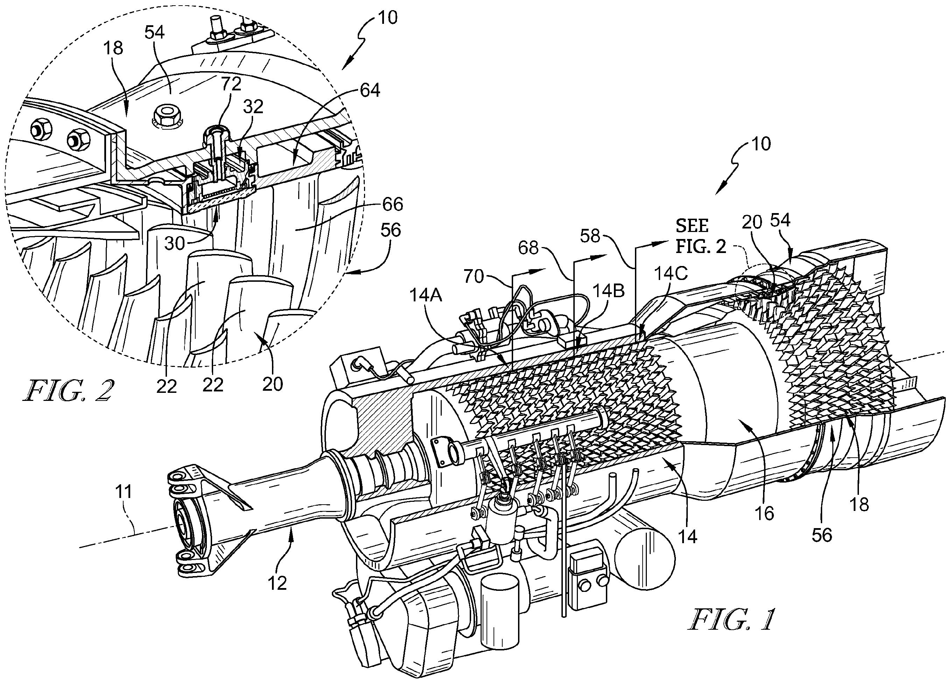

An illustrative gas turbine engine 10 includes an output shaft 12, a compressor 14, a combustor 16, and a turbine 18 as shown in Fig. 1. The turbine 18 includes a rotating turbine wheel assembly 20 and a static turbine vane assembly 56 (sometimes called a track-retaining vane assembly 56) as shown in Figs. 1 and 2. The rotating turbine wheel assembly 20 is pushed by hot high-pressure combustion products 24 formed in the combustor 16 to cause the rotating turbine wheel assembly 20 to rotate about a central axis 11 of the engine 10; thereby driving the compressor 14 and the output shaft 12.

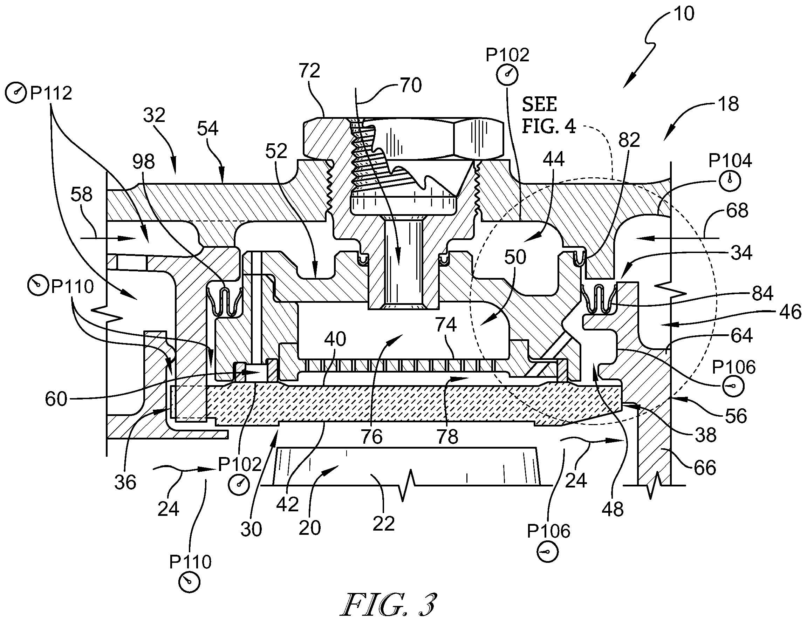

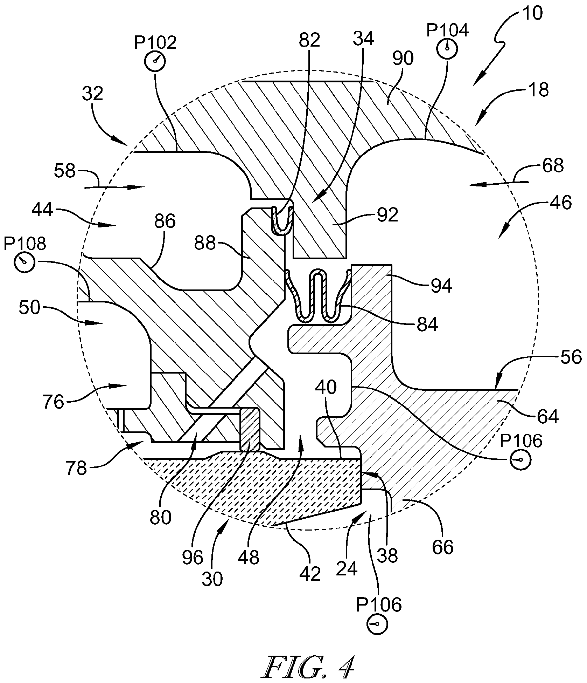

The turbine 18 further includes a blade track 30, a support assembly 32 arranged around the blade track 30, and a seal system 34 as shown in Figs. 3 and 4. The blade track 30 is arranged around the rotating turbine wheel assembly 20 to block combustion products from passing over blades 22 of the turbine wheel assembly 20 without pushing the blades 22 to rotate. The support assembly is 32 is formed to define a plurality of cavities 44, 46, 48, 50 arranged to receive pressurized air to cool the blade track 30 as it is exposed to the hot combustion products 24 acting on the rotating turbine wheel assembly 20. The seal system 34 is arranged to block the pressurized air from escaping the respective cavities 44, 46, 48, 50 as suggested in Figs. 3 and 4.

Each cavity 44, 46, 48, 50 is pressurized differently such that a pressure difference exists between the cavities 44, 46, 48, 50 as suggested in Figs. 3 and 4. The seal system 34 includes a plurality of seals 82, 84 arranged to seal the cavities 44, 46, 48, 50 from one another and to distribute the pressure differences formed between the cavities 44, 46, 48, 50 across the plurality of seals 82, 84. Accordingly, the pressure acting on any one seal 82, 84 is less than the entire pressure drop across the plurality of cavities 44, 46, 48, 50. As a result, the leakage flow around the seals 82, 84 can be reduced when compared to systems with one seal sealing against a large pressure.

Illustratively, the seal system 34 includes a high-pressure seal 82 and an intermediate-pressure seal 84 sealing outward of a trailing edge 38 of the blade track 30 where an aft gas path pressure P106 inside the blade track 30 is less than cavity pressures P102, P104, 108 as shown in Fig. 3. The high-pressure seal 82 is arranged to block fluid communication between a high-pressure retention cavity 44 and an intermediate-pressure bleed cavity 46. The intermediate-pressure seal 84 is arranged to block fluid communication between the intermediate-pressure bleed cavity 46 and a vent cavity 48 that is in fluid communication with the hot combustion products 24. As a result, the pressure difference between the high-pressure retention cavity 44 and the relatively low-pressure vent cavity 48 is distributed across more than one seal.

As shown in Fig. 1, the illustrative aerospace gas turbine engine 10 is cut-away to show that the engine 10 includes the output shaft 12, the compressor 14, the combustor 16, and the turbine 18. The output shaft 12 is configured to be coupled to a propeller, fan, or gearbox and is driven by the turbine 18. The compressor 14 compresses and delivers air to the combustor 16. The combustor 16 mixes fuel with the compressed air received from the compressor 14 and ignites the fuel. The hot combustion products 24 of the combustion reaction in the combustor 16 are directed into the turbine 18 and the turbine 18 extracts work to drive the compressor 14 and the output shaft 12.

The turbine 18 illustratively includes the turbine wheel assembly 20 and the static turbine vane assembly 56 as shown in Figs. 1 and 2. The turbine wheel assembly 20 includes a plurality of corresponding turbine blades 22 configured to be pushed by the combustion products 24 to cause the turbine wheel assembly 20 to rotate; thereby, driving the rotating components of the compressor 14 and/or the output shaft 12. The vane assembly 56 includes a plurality of corresponding of airfoils 66 that direct the combustion products 24 from the combustor 16 toward the blades 22 of a downstream turbine wheel assembly.

The turbine 18 further includes the blade track 30 that extends around the turbine wheel assembly 20 to block combustion products 24 from passing over the blades 22 without pushing the blades 22 to rotate as suggested in Fig. 3. Combustion products 24 that are allowed to pass over the blades 22 do not push the blades 22 and such passed-over products 24 contribute to lost performance within the engine 10.

The illustrative blade track 30 is concentric with and nested into the support assembly 32 along the central axis 11 of the engine 10 to form a turbine shroud. In the illustrative embodiment, the blade track 30 is a unitary component forming a full hoop. The blade track 30 is a component of one-piece, continuous construction, rather than as a series of joined segments. This construction eliminates gaps that may be formed between parts of a multi-piece (or segmented) blade track. In the illustrative embodiment, the blade track 30 comprises ceramic matrix composite materials.

The blade track 30 includes a leading edge 36, a trailing edge 38, a radial outer surface 40, and a radial inner surface 42 as shown in Fig. 3. The leading edge 36 is located toward a forward end of the gas turbine engine 10. The trailing edge 38 is axially spaced apart from the leading edge 36 toward an aft end of the engine 10. The radial outer surface 40 extends between the leading edge 36 and the trailing edge 38. The radial inner surface 42 is spaced apart from the radial outer surface 40 to locate the radial inner surface 42 radially between the radial outer surface 40 and the central axis 11. The radial inner surface 42 interconnects the leading edge 36 and the trailing edge 38 and interacts with the hot combustion products 24.

In the illustrative embodiment, the support assembly 32 is formed to define the retention cavity 44, the bleed cavity 46, and the vent cavity 48 as shown in Fig. 3. The cavities 44, 46, 48 cool the blade track 30 and other turbine components and seal the support assembly 32 from the hot combustion products 24. The retention cavity 44 is arranged to receive high-pressure air to seal and cool the leading edge 36 and forward end of the blade track 30. The bleed cavity 46 is arranged to receive intermediate-pressure air to seal and cool an aft portion of the turbine 18. The vent cavity 48 is in fluid communication with the hot combustion products 24 and provides a path for any leaked cooling air to join the combustion products 24. In the illustrative embodiment, the support assembly 32 further defines a thermal management chamber 50 configured to receive and direct intermediate-pressure air into the vent cavity 48 to resist the flow of the hot low-pressure combustion products 24 from entering into the vent cavity 48.

The support assembly 32 illustratively includes a carrier 52, a turbine case 54, and the track-retaining vane assembly 56 as shown in Figs. 3 and 4. The carrier 52 is an annular, round metallic component that is configured to support the blade track 30 in position adjacent the blades 22 of the turbine wheel assembly 20. The turbine case 54 extends around the carrier 52 and supports the carrier 52 and the blade track 30 relative to the central axis 11. The track-retaining vane assembly 56 engages the trailing edge 38 of the blade track 30 to position the blade track 30 axially relative to other static turbine components in the turbine 18.

The seal system 34 includes the high-pressure seal 82 and the intermediate-pressure seal 84 as shown in Figs. 3 and 4. Each of the seals 82, 84 are annular and extend circumferentially about the central axis 11. In some embodiments, seals 82, 84 may be split rings and/or may be segmented. The high-pressure seal 82 engages the turbine case 54 and the carrier 52 to seal the bleed cavity 46 from the retention cavity 44. The intermediate-pressure seal 84 engages the carrier 52 and the track-retaining vane assembly 56 to seal the bleed cavity 46 from the vent cavity 48.

In the illustrative embodiment, the high-pressure seal 82 has a U-shaped cross-section when viewed circumferentially relative to the central axis 11. The intermediate-pressure seal 84 has a W-shaped cross-section when viewed circumferentially relative to the central axis 11. In other embodiments, the seals 82, 84 may have any other pressure activated cross-sections or other suitably shaped cross-sections.

The carrier 52 and the turbine case 54 cooperate to define the retention cavity 44 as shown in Fig. 3. The retention cavity 44 is in fluid communication with the compressor 14 and is arranged to receive pressurized air from the compressor 14 to seal and cool a forward end and the leading edge 36 of the blade track 30. In the illustrative embodiment, the retention cavity 44 is fluidly connected to a compressor discharge stage 14C of the compressor 14 that directs high-pressure air 58 from the compressor discharge stage 14C into the retention cavity 44.

Illustratively, the carrier 52 includes a support band 86 and an aft flange 88 as shown in Fig. 4. The support band 86 extends axially relative to the central axis 11 to form a portion of the retention cavity 44. The aft flange 88 extends radially outward toward the turbine case 54 to close an aft end of the retention cavity 44. The turbine case 54 includes an outer band 90 and a partition flange 92 as shown in Fig. 4. The outer band 90 of the turbine case extends axially relative to the central axis 11 and is radially spaced apart from the support band 86 of the carrier 52 to define the retention cavity 44. The partition flange 92 extends radially inward toward the carrier 52 and the central axis 11. The partition flange 92 is located adjacent the aft flange 88 to close an aft end of the retention cavity 44 and a forward end of the bleed cavity 46. The high-pressure seal 82 engages the partition flange 92 and the aft flange 88 of the carrier 52 to seal the bleed cavity 46 from the retention cavity 44.

The illustrative carrier 52 is formed to include an annular forward buffer chamber 60 shown in Fig. 3. During operation, the high-pressure air 58 is directed from the retention cavity 44 radially inward through the support band 86 of the carrier 52 toward the blade track 30 into the forward buffer chamber 60. The forward buffer chamber 60 is arranged around the forward end of the blade track 30 to cause the pressurized air 58 to cool the leading edge 36 of the blade track 30. Illustratively, two seals are located in the forward buffer chamber 60 as shown in Fig. 3. The two seals block the combustion products 24 from flowing over the radial outer surface 40 of the blade track 30.

The combustion products 24 have a pressure P110 at the forward end of the blade track 30 as shown in Fig. 3. As the combustion products 24 rotate the turbine blades 22, the pressure drops and, as a result, the combustion products 24 have an average pressure P106 at the aft end of the blade track 30 that is lower than the average pressure P110. As shown in Fig. 3, a W-seal 98 is located radially outward of the blade track 30 to block a pressure P112 from flowing the retention cavity 44 into the gaspath, thereby bypassing the combustor. In the illustrative embodiment, the average pressure P112 is greater than the average pressure P102.

The average pressure P102 of the high-pressure air 58 is greater than the average pressure P110 of the combustion products 24. As such, the high-pressure air 58 is directed into the forward buffer chamber 60 so that, if some of the high-pressure air 58 escapes the forward buffer chamber 60, it cools and seals the turbine components. For example, if the air 58 flows axially forward around the leading edge 36 of the blade track 30, it will resist the pressure P110 of hot combustion products 24 over the blade track 30 at the forward end of the blade track 30 and, as such, it buffers the forward end of the blade track. The air will then join the hot combustion products 24 at the forward end of the blade track 30. If the air 58 flows axially aft, it will flow over the radial outer surface 40 of the blade track 30 toward the trailing edge 38 of the blade track 30 cooling the blade track 30 and join the hot combustion products 24 at the aft end of the blade track 30.

The track-retaining vane assembly 56 includes an outer band 64 and an airfoil 66 as shown in Fig. 3. The outer band 64 engages the trailing edge 38 of the blade track 30 to locate the blade track 30 axially relative to the central axis 11 as shown in Fig. 3. The airfoil 66 extends radially inwardly from the outer band 64 and is configured to direct the hot combustion products 24 into a downstream turbine wheel assembly included in the turbine 18.

The track-retaining vane assembly 56 cooperates with the turbine case 54 to define the bleed cavity 46 as shown in Fig. 3. The outer band 64 is formed to include a forward flange 94 that extends radially outward toward the turbine case 54 as shown in Fig. 4. The forward flange 94 of the outer band 64 and the partition flange 92 of the turbine case 54 cooperate to close the forward end of the bleed cavity 46. The intermediate-pressure seal 84 engages the forward flange 94 and the aft flange 88 to seal the vent cavity 48 from the bleed cavity 46.

The bleed cavity 46 is configured to receive pressurized air from the compressor 14 to cool and seal an aft portion of the turbine 18. In the illustrative embodiment, the bleed cavity 46 is fluidly connected to an intermediate stage 14B of the compressor 14 and the bleed cavity 46 is arranged to receive intermediate-pressure air 68 from the intermediate stage 14B of the compressor 14. Illustratively, the intermediate stage 14B of the compressor 14 is located upstream and axially forward of the compressor discharge stage 14C of the compressor 14.

The intermediate-pressure air 68 has a lower pressure P104 than the pressure P102 of the high-pressure air 58 received by the retention cavity 44. The bleed cavity 46 is separated from the retention cavity 44 by a seal 82 included in the seal system 34 to block the high-pressure air 58 from flowing into the intermediate-pressure bleed cavity 46. The turbine 18 is configured so that, if any air leaks around the seal 82, the high-pressure air 58 overcomes the intermediate-pressure air 68 and flows into the bleed cavity 46 without damaging the turbine 18.

The carrier 52, the track-retaining vane assembly 56, and the blade track 30 cooperate to define the vent cavity 48 as shown in Figs. 3 and 4. A portion of the hot combustion products 24 having the pressure P106 may flow outward and into the vent cavity 48 during operation of the gas turbine engine 10. The bleed cavity 46 is separated from the vent cavity 48 by the seal 84 to block cooling air from leaking out of the bleed cavity 46. The turbine 18 is configured so that, if air leaks around the seal 84, the pressure 104 of the intermediate-pressure air 68 is greater than and overcomes the low-pressure P106 of the combustion products 24 to block the combustion products from flowing into the support assembly 32 and damaging the turbine 18. In the illustrative embodiment, the vent cavity 48 is located radially inward of the retention cavity 44.

In the illustrative embodiment, the vent cavity 48 is located axially between the retention cavity 44 and the bleed cavity 46 as shown in Fig. 3. Illustratively, portions of the retention cavity 44 and the bleed cavity 46 axially overlap the vent cavity 48.

In the illustrative embodiment, the carrier 52 is further formed to define a radially inward opening thermal management chamber 50 as shown in Fig. 3. The thermal management chamber 50 is arranged to receive pressurized air from the compressor 14 and direct the air onto the blade track 30 to cool the blade track 30. The retention cavity 44 is illustratively axially aligned with and located radially outward of the thermal management chamber 50.

Illustratively, the thermal management chamber 50 is fluidly connected to an early-stage 14A of the compressor 14 and configured to receive early-stage air 70 from the early-stage 14A as suggested in Fig. 1. The early-stage 14A of the compressor 14 is located upstream and axially forward of the intermediate stage 14B and the compressor discharge stage 14C of the compressor.

The early-stage air 70 has an average pressure P108 that is lower than the average pressure P102 of the high-pressure air 58. The average pressure P108 of the early stage air 70 is lower than the average pressure P104 of the intermediate-pressure air 68, but greater than the average pressure P106 of the combustion products 24 at the aft end of the blade track 30. In other embodiments, the thermal management chamber 50 is fluidly connected to stage 14B of the compressor. In other embodiments, the thermal management chamber 50 is fluidly connected to a stage of the compressor that is downstream of stage 14B and upstream of stage 14C.

Illustratively, the early-stage air 70 is conducted through a cross-key 72 that extends through the turbine case 54 into the carrier 52 to locate the carrier 52 relative to the turbine case 54 as shown in Fig. 3. In other embodiments, the cross-key 72 is omitted and the air 70 is conducted into the carrier 52 via alternative flow paths and/or conduits. The carrier 52 further includes a distribution plate 74 that extends axially through the thermal management chamber 50 to partition the thermal management chamber 50 into a radial outer distribution cavity 76 and a radial inner cooling cavity 78.

The radial outer distribution cavity 76 is configured to receive and distribute the early-stage cooling air 70 circumferentially around the central axis 11 to cause the air 70 received in the thermal management chamber 50 to have a generally uniform pressure. The distribution plate 74 is formed to include a plurality of holes arranged to direct the early-stage cooling air 70 out of the distribution cavity 76 into the cooling cavity 78 toward the radial outer surface 40 of the blade track 30.

In the illustrative embodiment, the cooling cavity 78 is fluidly connected to the vent cavity 48 as shown in Fig. 4. The carrier 52 is arranged to direct the early-stage air 70 across the radial outer surface 40 of the blade track 30 into the vent cavity 48 through an aft passage 80. As such, the pressure P108 of the early-stage air 70 overcomes the low-pressure P106 of the combustion products 24 at the aft end of the blade track 30 to block the combustion products 24 from flowing into the thermal management chamber 50 of the support assembly 32. A seal 96 is positioned between the carrier 52 and the aft end of the blade track 30 to block excessive air leak out and to allow for relative thermal growth between the carrier 52 and the blade track 30. Illustratively, the seal 96 is a piston ring seal 96.

In illustrative embodiments, the one-piece full hoop of the blade track 30 encourages uniform radial expansion of the blade track 30 at high temperatures. Uniform radial expansion of the blade track 30 allows the blade track 30 to remain round at high temperatures which results in the ability to further maintain a small gap between the blades 22 and the blade track 30 while hot combustion products 24 are being directed over the blades 22 and the blade track 30.

The blade track 30 is illustratively made from a ceramic material; and, more particularly, a ceramic matrix composite (CMC) including silicon carbide fibers and silicon carbide matrix. The blade track 30 has a relatively low coefficient of thermal expansion because of its composition. Considering the relatively small coefficient of thermal expansion, the blade track 30 can be designed to maintain a small gap between the blade track 30 and the blades 22 thereby improving performance of the engine 10.

According to at least one method of operating the gas turbine engine 10, the retention cavity 44 is fed with the flow of high-pressure air 58 having a first pressure P102. The bleed cavity 46 is fed with the flow of intermediate-pressure air 68 having a second pressure P104. The vent cavity 48 is fed with a flow of low-pressure air 70 having a third pressure P108. The seal 82 is provided between the retention cavity 44 and the bleed cavity 46 to block the flow of air 58 from escaping the retention cavity 44 and entering the bleed cavity 46. The seal 84 is provided between the bleed cavity 46 and the vent cavity 48 to block the flow of air 68 from escaping the bleed cavity 46 and entering the vent cavity 48. In the illustrative embodiment, the average pressure P102 of the flow of air 58 is greater than the average pressure P104, P106 of the air 68, 24 and the average pressure P104 of the flow of air 68 is greater than the average pressure P106 of the flow of air 24.

While the disclosure has been illustrated and described in detail in the foregoing drawings and description, the same is to be considered as exemplary and not restrictive in character, it being understood that only illustrative embodiments thereof have been shown and described and that all changes and modifications that come within the scope of protection defined in the appended claims are desired to be protected.

## Claims

1. A gas turbine engine comprising
a combustor,
a compressor,
a blade track (30) arranged around a central axis (11) of the gas turbine engine (10), the blade track having a leading edge, a trailing edge (38) axially spaced apart from the leading edge, a radial outer surface (40) that extends between the leading and trailing edges, and a radial inner surface (42) spaced apart from the radial outer surface (40),
a support assembly (32) arranged around the blade track (30) to support the blade track relative to the central axis, **characterised by** the support assembly (32) being formed to define a retention cavity (44) configured to receive relatively high-pressure compressor air that is directed to the leading edge of the blade track to resist gasses from flowing past the leading edge over the radial outer surface (40) of the blade track, a vent cavity (48) configured to receive relatively low-pressure compressor air that is directed to the trailing edge (38) of the blade track (30) to resist the gasses from flowing past the trailing edge (38) over the radial outer surface (40) of the blade track, and a bleed cavity (46) fluidly interconnecting the retention cavity (44) with the vent cavity (48) and configured to receive intermediate-pressure compressor air, and
a seal system (34) including a first seal (82) configured to block fluid communication between the retention cavity (44) and the bleed cavity (46) and a second seal (84) configured to block fluid communication between the bleed cavity (46) and the vent cavity (48) so that a pressure difference across either of the first and second seals (82, 84) is less than a pressure difference between the retention cavity (44) and the vent cavity (48).

2. The gas turbine engine of claim 1 wherein the support assembly (32) includes a carrier (52) arranged radially outward of and around the blade track (30) and a track-retaining vane assembly (56) that cooperate with the blade track (30) to define the vent cavity (48), the track-retaining vane assembly (56) including an outer band (90) that engages the trailing edge (38) of the blade track and a static airfoil that extends radially inward of the outer band.

3. The gas turbine engine of claim 2, wherein the support assembly (32) further includes a turbine case (54) arranged around the carrier (52) and the turbine case (54) cooperates with the carrier (52) to define the retention cavity (44).

4. The gas turbine engine of claim 2, wherein the support assembly (32) further includes a turbine case (54) arranged around the track-retaining vane assembly (56) and the carrier (52) and the track-retaining vane assembly (56) cooperate to define the bleed cavity (46).

5. The gas turbine engine of claim 1, wherein the support assembly (32) includes a carrier (52) that cooperates with the blade track (30) to define a thermal management chamber (50) therebetween.

6. The gas turbine engine of claim 5, wherein the support assembly (32) further includes a distribution plate (74) coupled to the carrier (52), the distribution plate (74) extends axially through the thermal management chamber (50) to partition the thermal management chamber (50) into a radial outer distribution cavity (76) configured to receive and distribute cooling air circumferentially around the central axis (11) and a radially inner cooling cavity, and the distribution plate (74) is formed to include a plurality of holes arranged to direct the cooling air out of the distribution cavity (76) into the cooling cavity (78) toward the radial outer surface (40) of the blade track (30) and optionally wherein cooling cavity (78) is in fluid communication with the vent cavity (48).

7. The gas turbine engine of claim 6, further comprising a compressor (14) having a plurality of compressor stages, the thermal management chamber (50) is fluidly connected to a first of the plurality of compressor stages, the bleed cavity (46) is fluidly connected to a second of the plurality of compressor stages, the retention cavity (44) is fluidly connected to a third of the plurality of compressor stages, the third of the plurality of compressor stages is located downstream of the first and second of the plurality of compressor stages, and the second of the plurality of compressor stages is located downstream of the first of the plurality of compressor stages.

8. A method of operating a turbine of a gas turbine engine, the gas turbine including;
a compressor,
a combustor,
a blade track (30) arranged around a central axis (11) of the gas turbine engine (10), the blade track having a leading edge and a trailing edge (38) axially spaced apart from the leading edge, a support assembly (32) arranged around the blade track (30) to support the blade track (30), a retention cavity (44) configured to receive high-pressure compressor air that is directed to the leading edge of the blade track (30), a vent cavity (48) configured to receive relatively low-pressure compressor air that is directed to a trailing edge (38) of the blade track (30), and a bleed cavity (46) fluidly interconnecting the retention cavity (44) with the vent cavity (48) and configured to receive intermediate-pressure compressor air,
the method comprising
feeding the retention cavity (44) with high pressure compressor air,
feeding the bleed cavity (46) with a intermediate pressure compressor air having a second pressure,
feeding the vent cavity (48) with hot combustion products ,
providing a first seal (82) between the retention cavity (44) and the bleed cavity (46) to block the high pressure compressor air from escaping the retention cavity (44) and entering the bleed cavity (46), and
providing a second seal (84) between the bleed cavity and the vent cavity to block the intermediate pressure compressor air from escaping the bleed cavity and entering the vent cavity (48).

9. The method of claim 8, wherein the high pressure compressor air is at a greater pressure than each of the intermediate pressure compressor air and the hot combustion products and the pressure of the intermediate pressure compressor air is greater than the pressure of the hot combustion products.

## Patentansprüche

1. Gasturbinenmotor, der eine Brennkammer, einen Verdichter, eine um eine Mittelachse (11) des Gasturbinenmotors (10) angeordnete Blattspurbahn (30) umfasst, wobei die Blattspurbahn eine Vorderkante, eine von der Vorderkante axial räumlich getrennte Hinterkante (38), eine radiale Außenfläche (40), die sich zwischen den Vorder- und Hinterkanten erstreckt und eine von der radialen Außenfläche (40) räumlich getrennte radiale Innenfläche (42) aufweist, wobei eine Trägeranordnung (32) um die Blattspurbahn (30) angeordnet wird, um die Blattspurbahn bezogen auf die Mittelachse zu tragen, **dadurch gekennzeichnet, dass** die Trägeranordnung (32) ausgebildet wird, einen Rückhaltehohlraum (44), der konfiguriert wird, um Hochdruck-Verdichterluft verhältnismäßig aufzunehmen, die auf die Vorderkante der Blattspurbahn gerichtet wird, um Gasen entgegenzuwirken, die hinter der Vorderkante über die radiale Außenfläche (40) der Blattspurbahn strömen, einen Entlüftungshohlraum (48), der konfiguriert wird, um Niederdruck-Verdichterluft verhältnismäßig aufzunehmen, die auf die Hinterkante (38) der Blattspurbahn (30) gerichtet wird, um den Gasen entgegenzuwirken, die hinter der Hinterkante (38) über die radiale Außenfläche (40) der Blattspurbahn strömen, und einen Ablasshohlraum (46), der den Rückhaltehohlraum (44) mit dem Entlüftungshohlraum (48) fluidmäßig verbindet und konfiguriert wird, um Mitteldruck-Verdichterluft aufzunehmen und ein Dichtungssystem (34) mit einer ersten Dichtung (82) zu definieren, das konfiguriert wird, um eine Fluidverbindung zwischen dem Rückhaltehohlraum (44) und dem Ablasshohlraum (46) und einer zweiten Dichtung (84) zu sperren, die konfiguriert wird, um eine Fluidverbindung zwischen dem Ablasshohlraum (46) und dem Entlüftungshohlraum (48) zu sperren, sodass eine Druckdifferenz über entweder der ersten oder zweiten Dichtung (82, 84) kleiner als eine Druckdifferenz zwischen dem Rückhaltehohlraum (44) und dem Entlüftungshohlraum (48) ist.

2. Gasturbinenmotor nach Anspruch 1, wobei die Trägeranordnung (32) einen auswärts von der und um die Blattspurbahn (30) radial angeordneten Träger (52) und eine spurhaltende Schaufelanordnung (56) aufweist, die mit der Blattspurbahn (30) zusammenwirken, um den Entlüftungshohlraum (48) zu definieren, wobei die spurhaltende Schaufelanordnung (56) ein äußeres Band (90), das in die Hinterkante (38) der Blattspurbahn eingreift und ein statisches Schaufelblatt aufweist, das sich radial einwärts von dem äußeren Band erstreckt.

3. Gasturbinenmotor nach Anspruch 2, wobei die Trägeranordnung (32) des Weiteren ein Turbinengehäuse (54) aufweist, das um den Träger (52) angeordnet wird, und das Turbinengehäuse (54) mit dem Träger (52) zusammenwirkt, um den Rückhaltehohlraum (44) zu definieren.

4. Gasturbinenmotor nach Anspruch 2, wobei die Trägeranordnung (32) des Weiteren ein Turbinengehäuse (54) aufweist, das um die spurhaltende Schaufelanordnung (56) angeordnet wird, und der Träger (52) und die spurhaltende Schaufelanordnung (56) zusammenwirken, um den Ablasshohlraum (46) zu definieren.

5. Gasturbinenmotor nach Anspruch 1, wobei die Trägeranordnung (32) einen Träger (52) aufweist, der mit der Blattspurbahn (30) zusammenwirkt, um zwischen diesen eine Wärmemanagementkammer (50) zu definieren.

6. Gasturbinenmotor nach Anspruch 5, wobei die Trägeranordnung (32) des Weiteren eine mit dem Träger (52) verbundene Verteilungsplatte (74) aufweist, wobei sich die Verteilungsplatte (74) axial durch die Wärmemanagementkammer (50) erstreckt, um die Wärmemanagementkammer (50) in einen radialen äußeren Verteilungshohlraum (76), der konfiguriert wird, Kühlluft aufzunehmen und umlaufend um die Mittelachse (11) zu verteilen, und einen radialen inneren Kühlhohlraum zu trennen, und wobei die Verteilungsplatte (74) ausgebildet wird, eine Vielzahl von Löchern aufzuweisen, die angeordnet werden, um die Kühlluft aus dem Verteilungshohlraum (76) in den Kühlhohlraum (78) in Richtung der radialen Außenfläche (40) der Blattspurbahn (30) zu richten, und wobei sich wahlweise der Kühlhohlraum (78) in Fluidverbindung mit dem Entlüftungshohlraum (48) befindet.

7. Gasturbinenmotor nach Anspruch 6, der des Weiteren einen Verdichter (14) mit einer Vielzahl von Verdichterstufen umfasst, wobei die Wärmemanagementkammer (50) mit einer ersten der Vielzahl von Verdichterstufen fluidmäßig verbunden wird, der Ablasshohlraum (46) mit einer zweiten der Vielzahl von Verdichterstufen fluidmäßig verbunden wird, der Rückhaltehohlraum (44) mit einer dritten der Vielzahl von Verdichterstufen fluidmäßig verbunden wird, wobei die dritte der Vielzahl von Verdichterstufen stromabwärts von der ersten und zweiten der Vielzahl von Verdichterstufen angeordnet wird, und die zweite der Vielzahl von Verdichterstufen stromabwärts von der ersten der Vielzahl von Verdichterstufen angeordnet wird.

8. Verfahren zum Betreiben einer Turbine eines Gasturbinenmotors, wobei die Gasturbine aufweist;
einen Verdichter,
eine Brennkammer,
eine um eine Mittelachse (11) des Gasturbinenmotors (10) angeordnete Blattspurbahn (30), wobei die Blattspurbahn eine Vorderkante und eine von der Vorderkante axial räumlich getrennte Hinterkante (38), eine um die Blattspurbahn (30) angeordnete Trägeranordnung (32), um die Blattspurbahn (30) zu tragen, einen Rückhaltehohlraum (44), der konfiguriert wird, Hochdruck-Verdichterluft aufzunehmen, die auf die Vorderkante der Blattspurbahn (30) gerichtet wird, einen Entlüftungshohlraum (48), der konfiguriert wird, um Niederdruck-Verdichterluft verhältnismäßig aufzunehmen, die auf eine Hinterkante (38) der Blattspurbahn (30) gerichtet wird, und einen den Rückhaltehohlraum (44) mit dem Entlüftungshohlraum (48) fluidmäßig verbindenden Ablasshohlraum (46) aufweist, der konfiguriert wird, Mitteldruck-Verdichterluft aufzunehmen, wobei das Verfahren ein Zuführen von Hochdruck-Verdichterluft zu dem Rückhaltehohlraum (44), ein Zuführen einer Zwischendruck-Verdichterluft mit einem zweiten Druck zu dem Ablasshohlraum (46), ein Zuführen von heißen Verbrennungsprodukten zu dem Entlüftungshohlraum (48), ein Bereitstellen einer ersten Dichtung (82) zwischen dem Rückhaltehohlraum (44) und dem Ablasshohlraum (46), um die Hochdruck-Verdichterluft vom Austreten aus dem Rückhaltehohlraum (44) und Eintreten in den Ablasshohlraum (46) zu sperren, und ein Bereitstellen einer zweiten Dichtung (84) zwischen dem Ablasshohlraum und dem Entlüftungshohlraum umfasst, um die Zwischendruck-Verdichterluft vom Austreten aus dem Ablasshohlraum und Eintreten in den Entlüftungshohlraum (48) zu sperren.

9. Verfahren nach Anspruch 8, wobei sich die Hochdruck-Verdichterluft auf einem größeren Druck als jeweils die Zwischendruck-Verdichterluft und die heißen Verbrennungsprodukte befindet und der Druck der Zwischendruck-Verdichterluft größer als der Druck der heißen Verbrennungsprodukte ist.

## Revendications

1. Moteur à turbine à gaz comprenant une chambre de combustion, un compresseur, un chemin d'aubes (30) agencé autour d'un axe central (11) du moteur à turbine à gaz (10), ledit chemin d'aubes possédant un bord d'attaque, un bord de fuite (38) espacé axialement du bord d'attaque, une surface externe radiale (40) qui s'étend entre les bords d'attaque et de fuite, et une surface interne radiale (42) espacée de la surface externe radiale (40), un ensemble support (32) agencé autour du chemin d'aubes (30) pour supporter le chemin d'aubes par rapport à l'axe central, **caractérisé par** l'ensemble support (32) formé pour définir une cavité de rétention (44) conçue pour recevoir l'air de compresseur à relativement haute pression qui est dirigé vers le bord d'attaque du chemin d'aubes pour résister à l'écoulement des gaz au-delà du bord d'attaque sur la surface externe radiale (40) du chemin d'aubes, une cavité d'évent (48) conçue pour recevoir l'air de compresseur à relativement basse pression qui est dirigé vers le bord de fuite (38) du chemin d'aubes (30) pour résister à l'écoulement des gaz au delà du bord de fuite (38) sur la surface externe radiale (40) du chemin d'aubes et une cavité de purge (46) reliant fluidiquement la cavité de rétention (44) avec la cavité d'évent (48) et conçue pour recevoir de l'air de compresseur à pression intermédiaire et un système d'étanchéité (34) comprenant un premier joint d'étanchéité (82) conçu pour empêcher une communication fluidique entre la cavité de rétention (44) et la cavité de purge (46) et un second joint d'étanchéité (84) conçu pour empêcher une communication fluidique entre la cavité de purge (46) et la cavité d'évent (48) afin qu'une différence de pression à travers l'un ou l'autre des premier et second joints d'étanchéité (82, 84) soit inférieure à une différence de pression entre la cavité de rétention (44) et la cavité d'évent (48).

2. Moteur à turbine à gaz selon la revendication 1, ledit ensemble support (32) comprenant un support (52) agencé radialement vers l'extérieur du chemin d'aubes (30) et autour de celui-ci et un ensemble soupape de rétention de chemin (56) qui coopère avec le chemin d'aubes (30) pour définir la cavité d'évent (48), ledit ensemble soupape de rétention de chemin (56) comprenant une bande externe (90) qui se met en prise avec le bord de fuite (38) du chemin d'aubes et un profil aérodynamique statique qui s'étend radialement vers l'intérieur de la bande externe.

3. Moteur à turbine à gaz selon la revendication 2, ledit ensemble support (32) comprenant en outre un carter de turbine (54) agencé autour du support (52) et ledit carter de turbine (54) coopérant avec le support (52) pour définir la cavité de rétention (44).

4. Moteur à turbine à gaz selon la revendication 2, ledit ensemble support (32) comprenant en outre un carter de turbine (54) agencé autour de l'ensemble soupape de rétention de chemin (56) et du support (52) et ledit ensemble soupape de rétention de chemin (56) coopérant pour définir la cavité de purge (46).

5. Moteur à turbine à gaz selon la revendication 1, ledit ensemble support (32) comprenant un support (52) qui coopère avec le chemin d'aubes (30) pour définir une chambre de gestion thermique (50) entre ceux-ci.

6. Moteur à turbine à gaz selon la revendication 5, ledit ensemble support (32) comprenant en outre une plaque de distribution (74) couplée au support (52), ladite plaque de distribution (74) s'étendant axialement à travers la chambre de gestion thermique (50) pour partager la chambre de gestion thermique (50) en une cavité de distribution externe radiale (76) conçue pour recevoir et distribuer circonférentiellement autour de l'axe central (11) l'air de refroidissement et une cavité de refroidissement interne radialement et ladite plaque de distribution (74) étant formée pour comprendre une pluralité de trous agencés pour diriger l'air de refroidissement hors de la cavité de distribution (76) dans la cavité de refroidissement (78) vers la surface externe radiale (40) du chemin d'aubes (30) et éventuellement ladite cavité de refroidissement (78) étant en communication fluidique avec la cavité d'évent (48).

7. Moteur à turbine à gaz selon la revendication 6, comprenant en outre un compresseur (14) possédant une pluralité d'étages de compresseur, ladite chambre de gestion thermique (50) étant reliée fluidiquement à un premier étage de compresseur de la pluralité d'étages de compresseur, ladite cavité de purge (46) étant reliée fluidiquement à un deuxième étage de compresseur de la pluralité d'étages de compresseur, ladite cavité de rétention (44) étant reliée fluidiquement à un troisième étage de compresseur de la pluralité d'étages de compresseur, ledit troisième étage de compresseur de la pluralité d'étages de compresseur étant situé en aval des premier et deuxième étages de compresseur de la pluralité d'étages de compresseur et ledit deuxième étage de compresseur de la pluralité d'étages de compresseur étant situé en aval du premier étage de compresseur de la pluralité d'étages de compresseur.

8. Procédé de fonctionnement d'une turbine d'un moteur à turbine à gaz, ladite turbine à gaz comprenant ;
un compresseur, une chambre de combustion, un chemin d'aubes (30) agencé autour d'un axe central (11) du moteur à turbine à gaz (10), ledit chemin d'aubes possédant un bord d'attaque et un bord de fuite (38) espacé axialement du bord d'attaque, un ensemble support (32) agencé autour du chemin d'aubes (30) pour supporter le chemin d'aubes (30), une cavité de rétention (44) conçue pour recevoir de l'air de compresseur haute-pression qui est dirigé vers le bord d'attaque du chemin d'aubes (30), une cavité d'évent (48) conçue pour recevoir de l'air de compresseur à relativement basse pression qui est dirigé vers un bord de fuite (38) du chemin d'aubes (30) et une cavité de purge (46) reliée fluidiquement à la cavité de rétention (44) avec la cavité d'évent (48) et conçue pour recevoir de l'air de compresseur à pression intermédiaire, ledit procédé comprenant l'alimentation de le cavité de rétention (44) avec de l'air de compresseur haute pression, l'alimentation de la cavité de purge (46) avec de l'air de compresseur à pression intermédiaire possédant une seconde pression, l'alimentation de la cavité d'évent (48) avec des produits de combustion chauds, la fourniture d'un premier joint d'étanchéité (82) entre le cavité de rétention (44) et la cavité de purge (46) pour empêcher l'air de compresseur haute pression de s'échapper de la cavité de rétention (44) et d'entrer dans la cavité de purge (46) et la fourniture d'un second joint d'étanchéité (84) entre la cavité de purge et la cavité d'évent pour empêcher l'air de compresseur à pression intermédiaire de s'échapper de la cavité de purge et d'entrer dans la cavité d'évent (48).

9. Procédé selon la revendication 8, ledit air de compresseur haute pression étant à une pression supérieure à la pression de chacun de l'air de compresseur à pression intermédiaire et des produits de combustion chauds et ladite pression de l'air de compresseur à pression intermédiaire étant supérieure à la pression des produits de combustion chauds.
